# EUROPEAN PATENT SPECIFICATION

(11) **EP 2 803 563 B1**
(45) Date of publication and mention of the grant of the patent: **12.08.2020**
(21) Application number: 14168007.4
(22) Date of filing: 13.05.2014
(51) Int. Cl.: B62H 1/02

(54) **BICYCLE KICKSTAND AND BICYCLE PROVIDED WITH SUCH A BICYCLE KICKSTAND**
FAHRRADSTÄNDER SOWIE FAHRRAD, VERSEHEN MIT EINEM SOLCHEN FAHRRADSTÄNDER
BÉQUILLE DE BICYCLETTE, ET BICYCLETTE EQUIPEE D'UNE TELLE BÉQUILLE

(30) Priority: 17.05.2013 NL 2010819
(43) Date of publication of application: 19.11.2014
(73) Proprietor: Spanninga Metaal B.V., 8501 MK Joure (NL)
(72) Inventor: Vellinga, Jacob, 8502 AL JOURE (NL)
(74) Representative: Algemeen Octrooi- en Merkenbureau B.V.

(56) References cited:
- WO-A1-2007/058083
- CN-A- 102 259 673
- DE-A1- 3 151 980
- DE-A1-102008 058 628
- DE-U1- 20 313 580
- GB-A- 656 206
- US-A- 456 347
- US-A- 2 866 654

## Description

The present invention relates to a bicycle kickstand, or at least a kickstand for a two-wheeler such as in particular a bicycle, comprising a mounting element for mounting the bicycle kickstand on a frame of a bicycle, an elongate support arm having a longitudinal direction and a first end and a second, opposite, free end, which support arm is connected to the mounting element at the location of the first end, being pivotable through a pivoting angle about a pivot axis between a retracted position and an extended position, and an adjusting means which is designed for changing the extended position of the support arm by moving at least the second end of the support arm relative to the mounting element.

DE 203 13 580 U1 relates to a kickstand having a support arm of which a lower part can be adjusted relative to an upper part.

DE 10 2008 058 628 A1 relates to a kickstand having a support arm comprising a lower part and an upper part, wherein the length of the upper part can be adjusted.

US 456,347 discloses a bicycle kickstand according to the preamble of claim 1.

NL 1031037 discloses a known bicycle kickstand having a support arm which consists of two parts. The two parts are movable relative to each other in the longitudinal direction of the support arm. By thus adjusting the length of the support arm, the stand can be used with bicycles of varying frame size.

Although the known bicycle kickstand as described above in itself functions adequately, is has the drawback that the adjusting construction as described has a major effect on the design of the bicycle kickstand.

Accordingly it is an object of the present invention to provide a bicycle kickstand comprising an improved adjusting construction, which can be adjusted for use with different bicycles of varying frame height.

The above object is achieved with the bicycle kickstand according to the present invention, as defined in claim 1. According to claim 1, the adjusting means is designed for moving at least the second end with a component transversely to the longitudinal direction of the support arm.

The present invention is based on the insight that the required adjustment feature for adjusting the height between the mounting element and the second, free end of the support arm in the extended position can be advantageously realised by moving at least the second end of the support arm with a component transversely to the longitudinal direction of the support arm. Because the support arm of the bicycle kickstand is oriented obliquely forward and sideways in the extended position thereof when mounted on a bicycle, the result of a movement with a component transversely to the longitudinal direction, such as a pivoting movement, is that the second, free end will also move in vertical direction. The bicycle kickstand can thus be adapted for use with different bicycles of varying frame height. The bicycle kickstand according to the present invention offers a greater freedom of design of the support arm.

The adjusting means is designed for pivoting the entire support arm about an adjustment pivot, wherein the adjustment pivot coincides with the pivot axis. Or, in other words, the adjusting means of the bicycle kickstand according to the present embodiment of a bicycle kickstand according to the invention is designed for changing the extended position of the support arm by moving at least the second end of the support arm relative to the mounting element by pivoting the entire support arm, wherein the adjustment pivot coincides with the pivot axis. The result is a very great freedom of design of the support arm.

The adjusting means comprises an adjusting element on the support arm, being displaceably connected thereto, which adjusting element is in contact with a stop member provided on the mounting element in the extended position, wherein the support arm is pivotable about the pivot axis as a result of displacement of the adjusting means.

In a simple yet effective preferred embodiment, the adjusting means is an externally threaded adjusting element, such as an adjusting screw, which is received in an internally threaded hole.

According to the invention, the adjusting element is provided on a protrusion that is present on the support arm, wherein the adjusting element is provided at the front side of the support arm, seen in the driving direction, at least in the mounted position of the bicycle kickstand on a bicycle and in the extended position of the support arm. As a result, the adjusting element is readily accessible to a user also in mounted position on a bicycle.

It is advantageous if the adjusting element is displaceable at least substantially in the longitudinal direction of the support arm.

The pivot axis is preferably the central axis of a shaft member which pivotally connects the support arm to the mounting element.

Preferably, a shaft member, with the pivot axis as the central axis thereof, is provided on one of the support arm and the mounting element, whilst two mutually aligned shaft receiving holes are provided on the other of the protrusion on the support arm and the mounting element for receiving the shaft member.

It is advantageous in that regard if the one of the shaft member and the shaft receiving holes provided on the support arm is provided on the protrusion on which the adjusting element is provided.

In a preferred embodiment, the pivot axis is oriented at least substantially transversely to the longitudinal direction of the support arm and at least substantially in the transverse direction of the bicycle, at least in mounted position on the bicycle.

Although the invention in particular relates to a stand for a bicycle, the use of a stand according to the invention with other types of two-wheelers, such as mopeds and motorcycles, falls within the scope of the present invention.

The present invention further relates to a two-wheeler, such as in particular a bicycle, on which a bicycle kickstand according to the present invention as described above is mounted. Advantages of the two-wheeler provided with a bicycle kickstand according to the invention are analogous to the advantages of the bicycle kickstand according to the invention as described in the foregoing.

The present invention will now be explained by means of a description of a number of preferred embodiments of a bicycle kickstand according to the present invention, in which reference is made to the following figures, in which:
Figure 1a shows a three-dimensional view of a first preferred embodiment of a bicycle kickstand according to the present invention,
Figure 1b shows the bicycle kickstand of figure 1a in another position of use,
Figure 2 shows a three-dimensional view of a mounting element of the bicycle kickstand of figure 1 a,
Figure 3 shows a three-dimensional view of a support arm of the bicycle kickstand according to figure 1 a,
Figure 4 shows a top plan view of the support arm of figure 3,
Figure 5 shows a rear view of the support arm of figure 3,
Figure 6 shows a side view of the bicycle kickstand of figure 1 a,
Figure 7 shows a front view of a not claimed bicycle kickstand, and
Figure 8 shows a front view of a not claimed bicycle kickstand.

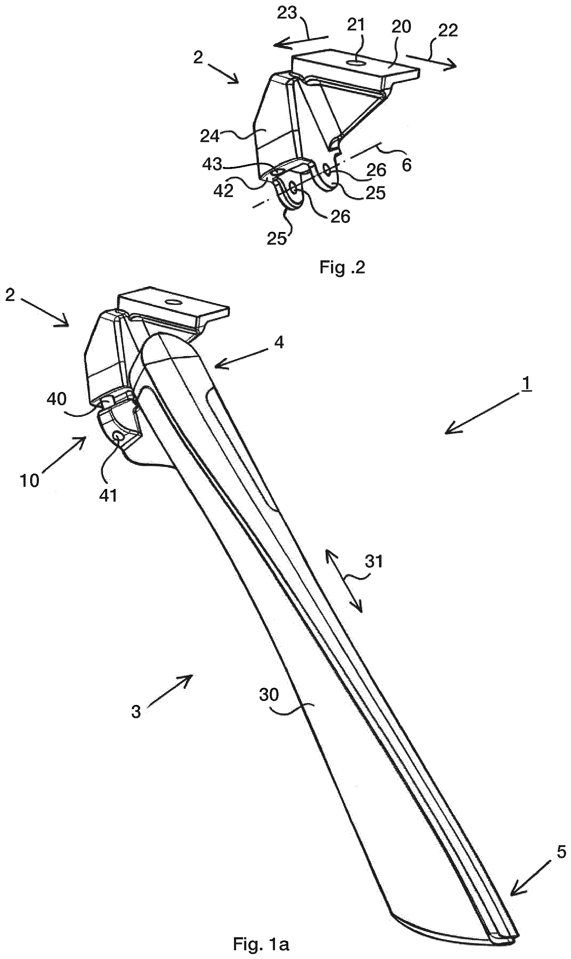

In figure 1a there is shown a bicycle kickstand 1 which comprises a support arm 3 and a mounting element 2. The mounting element 2 comprises a mounting plate 20 provided with a hole 21 for mounting the bicycle kickstand 1 on a bicycle, usually directly behind the bracket, using a bolt connection. In the mounted position of the bicycle kickstand 1 on a bicycle, the transverse direction of the bicycle is the direction indicated by the arrow 22 and the longitudinal direction of the bicycle is the direction indicated by the arrow 23. The mounting element 2 further comprises a support arm suspension element 24 which is provided with lips 25 at a bottom side 2 thereof, in which through holes 26 are present. The holes 26 are mutually aligned and have a central axis 6 which, as will be explained in more detail below, forms a pivot axis 6 about which the support arm 3 can pivot relative to the mounting element 2.

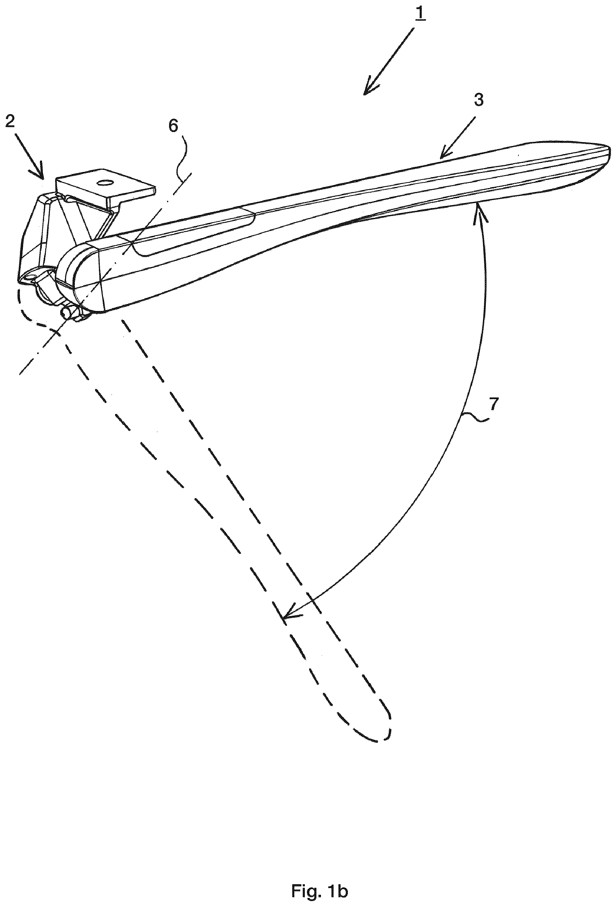

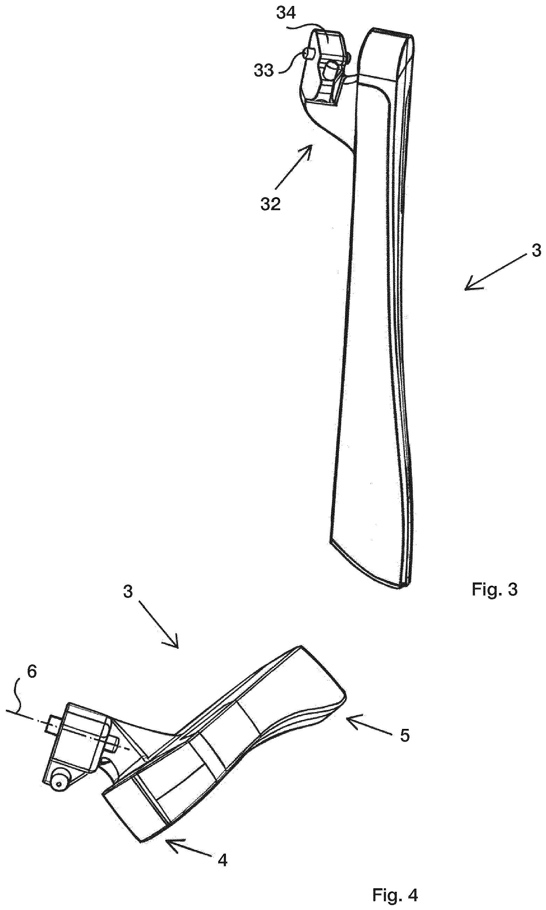

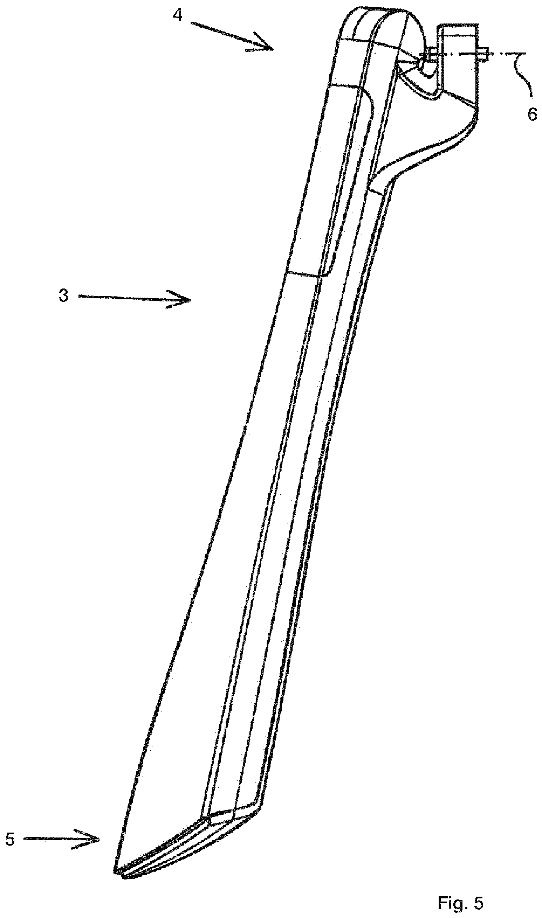

As is shown in particular in figures 3-5, the support arm 3 is essentially made up of an elongate web portion 30. The support arm 3 has a longitudinal direction 31. Provided on a first, upper end 4 of the support arm 3 is a protrusion 32, through which a through bore extends, through which a shaft member 33 is passed. The support arm 3 can now be placed between the lips 25 of the mounting element 2 with the part 34 of the protrusion 32, after which the shaft member 33 can be passed through the bore in the protrusion 32 and the holes 26 in the mounting element 2, which are aligned at that point, so that the support arm 3 is thus pivotable relative to the mounting element 2 about the shaft member 33 with the pivot axis 6 as its central axis. In figure 1 a an extended position of the support arm is shown. In the extended position, the support arm 3 forms a support on a surface on which the bicycle is standing, in which position a second, free end 5 is in contact with said surface. In figure 1b the retracted position of the support arm 3 is shown, with the extended position being illustrated in dashed lines. When a bicycle is being ridden, the support arm 3 is usually in the retracted position. In the retracted position, the support arm 3 usually extends substantially parallel to a frame tube from the bracket to the rear axle. The support arm 3 pivots about the pivot axis 6 between the aforesaid retracted and extended positions, through a pivoting angle indicated at 7 in figure 1 b.

The bicycle kickstand 1 also comprises an adjusting means 10. The adjusting means 10 comprises an adjusting screw 40, which forms an adjusting element of the adjusting means 10. The adjusting screw 40 is provided in a threaded bore 41 in the protrusion 32 and extends substantially in the longitudinal direction 31 of the support arm 3. The adjusting means 10 is provided at the front side of the support arm 3, i.e. at least in the mounted position on a bicycle, so that the adjusting screw 40 is readily accessible for adjusting. The mounting element 2 comprises a stop surface 42 associated with the adjusting screw 40, directly opposite thereto, at least in the extended position of the support arm 3, which stop surface 42 has a very shallow centring recess 43 at the position where the adjusting screw 40 is in contact with the stop surface 42 (as shown in figure 1a), into which a tip of the adjusting screw 40 extends. As figure 1a shows, the adjusting means 10 limits the pivoting angle 7 of the bicycle kickstand 1 in the extended position as a result of the adjusting screw 40 being in contact with the stop surface 42.

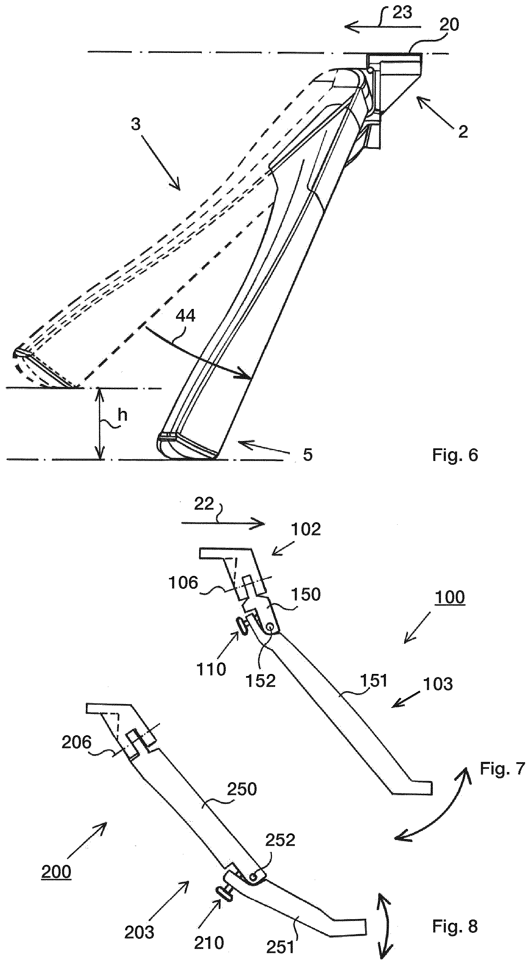

As figure 6 shows, the support arm 3 extends downward and forward, seen in side view. When in the extended position the adjusting screw 40 is turned in, i.e. the distance between the protrusion 32, or at least the part thereof on which the adjusting screw 40 is provided, and the stop surface 42 is increased, the extended position of the support arm 3 will change as a result of the support arm 3 pivoting slightly toward the retracted position, causing at least the second end of the support arm to move with a component transversely to the longitudinal direction of the support arm. In other words, the pivoting angle 7 is limited to the effect that the support arm 3 will extend at a smaller angle relative to the vertical in the extended position, at least in mounted position on a bicycle. By moving the adjusting screw 40, an adjusting angle as indicated at 44 in figure 6 is realised. The extended position prior to adjusting is illustrated in dashed lines in figure 6. As is also shown in figure 6, a result of limiting the pivoting angle 7 via the adjustment angle 44 is that in the adjusted extended position a lower free end 5 of the support arm 3 will be positioned a vertical distance h lower than in the situation prior to adjusting. As a result of this difference in height h, the position of the bicycle, i.e. the angle of the bicycle relative to the vertical, has shifted more toward the vertical, seen in the driving direction. In other words, the position of the bicycle is more upright. On the other hand, when the adjusting screw 40 is turned out, as a result of which the adjusting angle 44 is changed in the opposite direction, i.e. the pivoting angle 7 is in fact increased as a result of the support arm 3 being able to pivot further forward, the angle of the bicycle relative to the vertical will increase, or, in other words, the bicycle will take up a more inclined position.

In order to realise a stable support of a bicycle by the bicycle kickstand 1, the angle of the bicycle relative to the vertical will need to be within a particular desired range. If now the bicycle kickstand 1 is mounted on a bicycle having a particular frame height, the above-described adjustment of the extended position of the support arm 3 by means of the adjusting means 10 can ensure that the bicycle will be oriented at a desired angle relative to the vertical in the extended position of the support arm 3.

Figure 7 shows a front view of a not claimed Z bicycle kickstand 100. Said bicycle kickstand 100 comprises a mounting element 102, in which a support arm 103 is mounted for pivoting movement about a pivot axis 106, in a manner analogous to the bicycle kickstand 1 as described in the foregoing, and by means of which the bicycle kickstand can be mounted on a bicycle. The support arm 103, however, is made up of a first part 150 and a second part 151. The first part 150 is pivotally connected to the mounting element 102 about the pivot axis 106 at a first end and pivotally connected to the second part 151 about an adjustment pivot 152 at a second end, which adjustment pivot extends transversely to the pivot axis 106, substantially in the longitudinal direction of the bicycle, at least in mounted position. The second part 151 has a free end for supporting the bicycle on a ground surface. The bicycle kickstand 100 further comprises an adjusting means 110, which is made up of an adjusting screw construction by means of which the angular position of the second part 151 relative to the first part 150 about the adjustment pivot 152 can be adjusted in order to thus raise or lower the free end of the support arm 103 in the extended position that is shown in figure 7 so as to thus realise an adjustment of the bicycle kickstand 100 to a different frame height of a bicycle.

The not claimed bicycle kickstand 200 shown in figure 8, is similar to the bicycle kickstand 100 as described above; in this case, however, the adjustment pivot 252 is located further toward the free end of the second part 251 of the support arm 203. In other words, the first part 250 thereof is relatively longer in comparison with the bicycle kickstand 100 according to figure 7.

## Claims

1. A bicycle kickstand (1) comprising a mounting element (2) for mounting the bicycle kickstand on a frame of a bicycle, an elongate support arm (3) having a longitudinal direction (31) and a first end (4) and a second, opposite, free end (5), which support arm (3) is connected to the mounting element at the location of the first end, being pivotable through a pivoting angle (7) about a pivot axis (6) between a retracted position and an extended position, and an adjusting means (10) which is designed for changing the extended position of the support arm by moving at least the second end (5) of the support arm relative to the mounting element, wherein
the adjusting means (10) is designed for moving at least the second end (5) with a component transversely to the longitudinal direction (31) of the support arm (3), wherein the adjusting means (10) is designed for pivoting the entire support arm (3) about an adjustment pivot (6), wherein the adjustment pivot coincides with the pivot axis (6), wherein the adjusting means (10) comprises an adjusting element (40) on the support arm (3), being displaceably connected thereto, which adjusting element is in contact with a stop member (42) provided on the mounting element in the extended position, wherein the support arm is pivotable about the pivot axis as a result of displacement of the adjusting means,
**characterized in that**
the adjusting element (40) is provided on a protrusion (32) that is present on the support arm (3), wherein the adjusting element (40) is provided at the front side of the support arm (3), seen in the driving direction, at least in the mounted position of the bicycle kickstand (1) on a bicycle and in the extended position of the support arm (3).

2. A bicycle kickstand according to claim 1, wherein the adjusting element is an externally threaded adjusting element (40), such as an adjusting screw, which is received in an internally threaded hole (41).

3. A bicycle kickstand according to claim 1 or 2, wherein the adjusting element (40) is displaceable at least substantially in the longitudinal direction of the support arm.

4. A bicycle kickstand according to any one of the preceding claims, wherein a shaft member (33), with the pivot axis as the central axis thereof, is provided on one of the support arm (3) and the mounting element (2), whilst two mutually aligned shaft receiving holes (26) are provided on the other of the protrusion on the support arm and the mounting element for receiving the shaft member.

5. A bicycle kickstand according to claim 4, wherein the one of the shaft member (33) and the shaft receiving holes (26) provided on the support arm is provided on the protrusion (32) on which the adjusting element is provided.

6. A bicycle kickstand according to any one of the preceding claims, wherein the pivot axis (6) is oriented at least substantially transversely to the longitudinal direction of the support arm and at least substantially in the transverse direction of the bicycle, at least in mounted position on the bicycle.

7. A bicycle on which a bicycle kickstand (1) according to any one of the preceding claims is mounted.

## Patentansprüche

1. Fahrradständer (1), umfassend ein Montageelement (2) zum Montieren des Fahrradständers an einem Rahmen eines Fahrrads, einen länglichen Stützarm (3) mit einer Längsrichtung (31) und einem ersten Ende (4) und einem zweiten, gegenüberliegenden, freien Ende (5), wobei der Stützarm (3) mit dem Montageelement an der Position des ersten Endes verbunden ist, um einen Schwenkwinkel (7) um eine Schwenkachse (6) zwischen einer eingeklappten Position und einer ausgeklappten Position schwenkbar ist, und ein Einstellmittel (10), das ausgestaltet ist zum Ändern der ausgeklappten Position des Stützarms durch Bewegen zumindest des zweiten Endes (5) des Stützarms relativ zum Montageelement,
wobei das Einstellmittel (10) dazu ausgestaltet ist, zumindest das zweite Ende (5) mit einer Komponente quer zur Längsrichtung (31) des Stützarms (3) zu bewegen, wobei das Einstellmittel (10) dazu ausgestaltet ist, den gesamten Stützarm (3) um einen Einstellschwenkpunkt (6) zu schwenken, wobei der Einstellschwenkpunkt mit der Schwenkachse (6) zusammenfällt, wobei das Einstellmittel (10) ein Einstellelement (40) am Stützarm (3) umfasst, das versetzbar damit verbunden ist, wobei das Einstellelement in der ausgeklappten Position in Kontakt mit einem am Montageelement vorgesehenen Anschlagelement (42) ist, wobei der Stützarm im Ergebnis der Versetzung des Einstellmittels um die Schwenkachse schwenkbar ist,
**dadurch gekennzeichnet, dass** das Einstellelement (40) an einem Vorsprung (32) bereitgestellt ist, der am Stützarm (3) vorhanden ist, wobei das Einstellelement (40) an der Vorderseite des Stützarms (3) bereitgestellt ist, gesehen in Fahrtrichtung, zumindest in der montierten Position des Fahrradständers (1) an einem Fahrrad und in der ausgeklappten Position des Stützarms (3).

2. Fahrradständer nach Anspruch 1, wobei das Einstellelement ein Einstellelement mit Außengewinde (40) ist, wie etwa eine Einstellschraube, das in einem Loch mit Innengewinde (41) aufgenommen ist.

3. Fahrradständer nach Anspruch 1 oder 2, wobei das Einstellelement (40) zumindest im Wesentlichen in der Längsrichtung des Stützarms versetzbar ist.

4. Fahrradständer nach einem der vorhergehenden Ansprüche, wobei ein Wellenelement (33), mit der Schwenkachse als mittlere Achse davon, an einem aus dem Stützarm (3) und dem Montageelement (2) bereitgestellt ist, während zwei aufeinander ausgerichtete Wellenaufnahmelöcher (26) an dem anderen aus dem Vorsprung am Stützarm und dem Montageelement zum Aufnehmen des Wellenelements bereitgestellt sind.

5. Fahrradständer nach Anspruch 4, wobei das eine aus dem Wellenelement (33) und den am Stützarm bereitgestellten Wellenaufnahmelöchern (26) an dem Vorsprung (32) bereitgestellt ist, an dem das Einstellelement bereitgestellt ist.

6. Fahrradständer nach einem der vorhergehenden Ansprüche, wobei die Schwenkachse (6) zumindest wesentlich quer zur Längsrichtung des Stützarms und, zumindest in montierter Position am Fahrrad, zumindest wesentlich in der Querrichtung des Fahrrads ausgerichtet ist.

7. Fahrrad, an dem ein Fahrradständer (1) nach einem der vorhergehenden Ansprüche montiert ist.

## Revendications

1. Béquille de bicyclette (1) comprenant un élément de montage (2) pour monter la béquille de bicyclette sur un cadre d'une bicyclette, un bras de support allongé (3) ayant une direction longitudinale (31) et une première extrémité (4) et une deuxième extrémité, opposée, libre (5), lequel bras de support (3) est relié à l'élément de montage à l'emplacement de la première extrémité, pouvant pivoter selon un angle de pivotement (7) autour d'un axe de pivot (6) entre une position rétractée et une position étendue, et un moyen de réglage (10) qui est conçu pour changer la position étendue du bras de support en déplaçant au moins la deuxième extrémité (5) du bras de support par rapport à l'élément de montage,
dans laquelle
le moyen de réglage (10) est conçu pour déplacer au moins la deuxième extrémité (5) avec une composante transversalement à la direction longitudinale (31) du bras de support (3), où le moyen de réglage (10) est conçu pour faire pivoter tout le bras de support (3) autour d'un pivot de réglage (6), où le pivot de réglage coïncide avec l'axe de pivot (6), où le moyen de réglage (10) comprend un élément de réglage (40) sur le bras de support (3), qui est relié de manière déplaçable à celui-ci, lequel élément de réglage est en contact avec un organe d'arrêt (42) prévu sur l'élément de montage dans la position étendue, où le bras de support peut pivoter autour de l'axe de pivot à la suite du déplacement du moyen de réglage,
**caractérisée en ce que**
l'élément de réglage (40) est prévu sur une saillie (32) qui est présente sur le bras de support (3), où l'élément de réglage (40) est prévu au niveau du côté avant du bras support (3), vu dans la direction d'entraînement, au moins dans la position montée de la béquille de bicyclette (1) sur une bicyclette et dans la position étendue du bras de support (3).

2. Béquille de bicyclette selon la revendication 1, dans laquelle l'élément de réglage est un élément de réglage fileté extérieurement (40), tel qu'une vis de réglage, qui est reçu dans un trou fileté intérieurement (41).

3. Béquille de bicyclette selon la revendication 1 ou 2, dans laquelle l'élément de réglage (40) est déplaçable au moins essentiellement dans la direction longitudinale du bras de support.

4. Béquille de bicyclette selon l'une quelconque des revendications précédentes, dans laquelle un organe d'arbre (33), avec l'axe de pivot comme étant son axe central, est prévu sur l'un du bras de support (3) et de l'élément de montage (2), tandis que deux trous de réception d'arbre mutuellement alignés (26) sont prévus sur l'autre de la saillie sur le bras de support et de l'élément de montage pour recevoir l'organe d'arbre.

5. Béquille de bicyclette selon la revendication 4, dans laquelle l'un de l'organe d'arbre (33) et des trous de réception d'arbre (26) prévus sur le bras de support est prévu sur la saillie (32) sur laquelle l'élément de réglage est prévu.

6. Béquille de bicyclette selon l'une quelconque des revendications précédentes, dans laquelle l'axe de pivot (6) est orienté de manière au moins essentiellement transversale à la direction longitudinale du bras de support et au moins essentiellement dans la direction transversale de la bicyclette, au moins en position montée sur la bicyclette.

7. Bicyclette sur laquelle une béquille de bicyclette (1) selon l'une quelconque des revendications précédentes est montée.
